# EUROPÄISCHE PATENTSCHRIFT

(11) **EP 2 934 925 B1**
(45) Veröffentlichungstag und Bekanntmachung des Hinweises auf die Patenterteilung: **02.05.2018**
(21) Anmeldenummer: 13794885.7
(22) Anmeldetag: 20.11.2013
(51) Int. Cl.: B60G 17/027, B60G 15/06

(54) **FEDERBEIN FÜR EIN KRAFTFAHRZEUG MIT EINER HÖHENVERSTELLEINRICHTUNG**
SUSPENSION STRUT FOR A MOTOR VEHICLE WITH A HEIGHT-ADJUSTMENT DEVICE
JAMBE DE FORCE À RESSORT POUR VÉHICULE AUTOMOBILE COMPRENANT UN DISPOSITIF DE RÉGLAGE DE HAUTEUR

(30) Priorität: 20.12.2012 DE 102012112717
(43) Veröffentlichungstag der Anmeldung: 28.10.2015
(73) Patentinhaber: ThyssenKrupp Bilstein GmbH, 58256 Ennepetal (DE)
(72) Erfinder: DIPL. -ING. LUCZAK, Hanno, 45527 Hattingen (DE); DIPL. -ING. MAGES, Stefan, 50354 Hürth (DE); DIPL. -ING. WÖLK, Markus, 45529 Hattingen (DE)
(74) Vertreter: thyssenkrupp Intellectual Property GmbH
(86) Internationale Anmeldenummer: PCT/EP2013/074229
(87) Internationale Veröffentlichungsnummer: WO 2014/095211

(56) Entgegenhaltungen:
- EP-A1- 1 813 449
- DE-A1- 3 223 195
- DE-A1-102006 006 871
- DE-B3- 10 336 155
- DE-B3-102004 014 336
- FR-A1- 2 840 257
- JP-A- S58 407
- JP-A- H1 044 738
- JP-A- S5 830 811
- JP-A- S60 136 635
- JP-A- S60 136 636
- JP-A- S60 192 138
- JP-A- S60 237 236
- JP-U- S6 118 911
- JP-U- S6 118 911
- US-A- 2 892 636
- US-A1- 2005 189 685
- US-A1- 2012 104 704

## Beschreibung

Die vorliegende Erfindung betrifft ein Federbein für ein Kraftfahrzeug mit einem Schwingungsdämpfer und mit einer Tragfeder, und das Federbein umfasst eine Hilfsfeder, die eine geringere Federrate aufweist als die Tragfeder, und durch die Hilfsfeder ist bei ausgefahrenem Schwingungsdämpfer eine Restvorspannung in der Tragfeder erzeugbar.

### STAND DER TECHNIK

Aus der US 2005/0189685 A1 ist ein Stoßdämpfer mit einer vorgespannten Luftkammer bekannt.

Aus der US 2012/0104704 A1 ist ein Stoßdämpfer mit einer Bechervorrichtung zur Höhenverstellung bekannt.

Aus der JP S61 18911 U ist ein Schwingungsdämpfer mit einer Vorrichtung zur Höhenverstellung bekannt.

Aus der DE 10 2006 006 871 A1 ist ein Federbein für ein Kraftfahrzeug mit einem Schwingungsdämpfer und mit einer Tragfeder bekannt, und es ist eine Hilfsfeder gezeigt, die sich an das untere Ende der Tragfeder anschließt. Die Tragfeder ist gegen einen Ringkörper abgestützt, und der Ringkörper stützt sich nach unten in Richtung zum Radträger auf der Hilfsfeder ab. Fährt der Schwingungsdämpfer ganz aus und entspannt sich dabei die Tragfeder, so kann sich die Hilfsfeder bei Unterschreiten einer Restvorspannung in der Tragfeder entspannen, sodass der Ringkörper, gegen den sich das obere Ende der Hilfsfeder abstützt, gegen die Tragfeder gedrückt werden kann. Der Hilfsfeder kommt damit die Aufgabe zu, auch bei vollständig entspannter Tragfeder diese leicht vorzuspannen, sodass insbesondere Klappergeräusche durch eine sich von dem Ringkörper beziehungsweise dem oberen Federteller lösende Tragfeder unterbunden werden können. Die Hilfsfeder bewirkt insbesondere, dass die Tragfeder auch in völlig entspanntem Zustand einerseits am Ringkörper und andererseits am oberen Federteller zuverlässig anliegt. Der Ringkörper bildet dabei einen Zwischenfederteller zwischen der Tragfeder und der Hilfsfeder.

Das Federbein weist ferner zwei Kolben-Zylinder-Aggregate auf, die radial außerhalb des Schwingungsdämpfers und radial innerhalb der Tragfeder angeordnet sind. Über die Aggregate kann die Vorspannung auf der Tragfeder verändert werden, wodurch sich die Federeigenschaft des Federbeins ändert, beispielsweise für eine Umstellung des Fahrverhaltens des Fahrzeugs von einer Komfort-Einstellung auf eine Sport-Einstellung.

Weiterhin sind Federbeine mit einer Höhenverstelleinrichtung bekannt, die zumeist aus einem Zylinderelement und einem Hubkolben aufgebaut sind, und wobei im Zylinderelement ein Druckraum gebildet ist, der durch ein Druckmittel beaufschlagt werden kann. Dadurch kann das Höhenniveau des Fahrzeugaufbaus verändert werden, indem der Druckraum mit einem Druckfluid beaufschlagt wird und indem der Hubkolben im Zylinderelement entsprechend bewegt wird.

Federbeine, die wenigstens eine Hilfsfeder aufweisen, und insbesondere noch über eine Höhenverstelleinrichtung verfügen, weisen eine erhebliche Baulänge auf, die häufig die Einbausituation derartiger Federbeine erschweren. Der Nachteil der großen Baulänge derartiger Federbeine entsteht insbesondere dadurch, dass die Hilfsfeder und die Tragfeder gemeinsam in Reihe angeordnet werden müssen. Zudem entsteht der Nachteil einer Geräuschbildung, wenn die Hilfsfeder in ungeschützter Weise unterhalb der Tragfeder angeordnet wird und Witterungseinflüssen ausgesetzt ist.

### OFFENBARUNG DER ERFINDUNG

Aufgabe der Erfindung ist es, ein Federbein für ein Kraftfahrzeug mit einem Schwingungsdämpfer und mit einer Tragfeder sowie mit einer Hilfsfeder zu schaffen, das eine geringe Baulänge aufweist und einfach ausgeführt ist. Insbesondere ist es die Aufgabe, die Hilfsfeder des Federbeins derart aufzunehmen, dass diese nicht den Witterungseinflüssen ausgesetzt ist.

Diese Aufgabe wird ausgehend von einem Federbein für ein Kraftfahrzeug gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass das Federbein eine Höhenverstellung aufweist, wobei die Hilfsfeder in der Höhenverstelleinrichtung integriert ist.

Die Erfindung geht dabei von dem Gedanken aus, die Anordnung der Hilfsfeder innerhalb oder wenigstens in baulicher Einheit mit der Höhenverstelleinrichtung auszuführen. Dadurch entsteht keine Vergrößerung der Baulänge des Federbeins trotz Anordnung der Hilfsfeder in Reihenanordnung mit der Tragfeder. Durch die integrierte Anordnung der Hilfsfeder in der Höhenverstelleinrichtung ist die Hilfsfeder ferner nicht der Witterung ausgesetzt.

Vorteilhafterweise weist die Höhenverstelleinrichtung ein Zylinderelement auf, wobei die Hilfsfeder im Zylinderelement aufgenommen ist. Das Zylinderelement kann topfförmig ausgebildet sein, und die Hilfsfeder kann derart dimensioniert sein, dass diese im Zylinderelement aufgenommen werden kann, ohne dieses in seinen Abmessungen an die Hilfsfeder anzupassen.

Weiterhin kann im Zylinderelement ein Hubkolben aufgenommen sein, der einen Druckraum im Zylinderelement beweglich begrenzt und wobei die Hilfsfeder im Druckraum angeordnet ist. Dabei stützt sich die Tragfeder außenseitig gegen den Hubkolben ab, und innenseitig kann die Hilfsfeder zwischen dem Hubkolben und dem Zylinderelement verspannt sein. Folglich wirkt der Hubkolben als Zwischenfederteller, und entspannt das Federbein und fährt der Schwingungsdämpfer aus, so kann durch die Hilfsfeder der Hubkolben mit einer in Richtung zur Tragfeder gerichteten Kraft beaufschlagt werden und bis zu einer Hubbegrenzung aus dem Zylinderelement herausgedrückt werden. Außenseitig kann sich die Tragfeder gegen den Hubkolben abstützen, sodass sich die Tragfeder mit der Hilfsfeder in Reihenanordnung befindet. Folglich kann auch ohne Druckbeaufschlagung des im Zylinderelement und dem gebildeten Druckraum ein Ausfahren des Hubkolbens aus dem Zylinderelement erzeugt werden, wodurch die gewünschte Restvorspannung in der Tragfeder aufrechterhalten bleibt.

Der Schwingungsdämpfer im Federbein weist eine Kolbenstange auf, die in Längsrichtung des Federbeins durch den Hubkolben hindurchgeführt ist und wobei die Kolbenstange mit dem Zylinderelement verbunden ist. Der Hubkolben kann innenseitig im Zylinderelement geführt sein. Vorteilhafterweise ist der Hubkolben gegen die Kolbenstange und insbesondere auch gegen die Innenseite des Zylinderelementes mit Dichtelementen abgedichtet. Insbesondere durch die hubbewegliche Führung des Hubkolbens in Längsrichtung des Schwingungsdämpfers wird durch den Hubkolben ein Zwischenfederteller gebildet, und auf einer ersten Seite des Zwischenfedertellers stützt sich die Hilfsfeder ab, und auf einer gegenüberliegenden, zweiten Seite des Zwischenfedertellers stützt sich die Tragfeder ab.

Auch ist es von Vorteil, wenn der Hubkolben eine um seine Längsrichtung ausgebildete, ringförmige Aufnahmetasche aufweist, in der die Hilfsfeder wenigstens teilweise einsitzen kann. Der Hubkolben kann gegen eine Anschlagscheibe zur Anlage gelangen, wenn dieser maximal in das Zylinderelement eingefahren ist, wobei die Aufnahmetasche zur Aufnahme der Hilfsfeder vorzugsweise derart bemaßt ist, dass bei Anlage der Anschlagscheibe gegen das Zylinderelement und insbesondere gegen ein Verbindungselement des Schwingungsdämpfers der Federdraht der Hilfsfeder nicht auf Block gedrückt wird. Durch die Aufnahmetasche zur Aufnahme der Hilfsfeder vergrößert sich die Bauhöhe der Höhenverstelleinrichtung trotz der Integration der Hilfsfeder nicht oder nicht wesentlich. Die ringförmig umlaufende Aufnahmetasche kann zwischen der Durchführung für die Kolbenstange und der äußeren Mantelfläche des Hubkolbens ausgebildet sein, und die Hilfsfeder drückt dabei mit ihrer Federkraft gegen den Bodenbereich der ringförmigen Aufnahmetasche an. Der innere Bereich des Hubkolbens kann zudem einen beispielsweise ebenfalls ringförmig umlaufenden Anschlagpuffer aus einem elastischen Material umfassen, der vor Kontakt des Hubkolbens gegen die Anschlagscheibe eine den Anschlag dämpfende Wirkung erzeugt.

Schlägt der Hubkolben gegen die Anschlagscheibe an, ergibt sich ein minimales Volumen des durch den Hubkolben beweglich begrenzten Druckraumes im Zylinderelement. Das Zylinderelement weist einen Druckmittelanschluss auf, über den der Druckraum mit einem Druckmittel beaufschlagt werden kann, beispielsweise mit Druckluft. Wird ein Überdruck im Druckraum erzeugt, so fährt der Hubkolben aus dem Zylinderelement aus, sodass sich der Druckraum vergrößert. Da sich die Tragfeder außenseitig gegen den Hubkolben abstützt, fährt die Kolbenstange, die endseitig über ein Verbindungselement mit dem Zylinderelement starr verbunden ist, aus dem Schwingungsdämpfer aus, sodass sich im Ergebnis der Fahrzeugaufbau des Kraftfahrzeugs anheben lässt.

Wenn der Kolben über einen definierten Verfahrweg aus dem Zylinderelement herausfährt, indem der Druckraum mit einem Druckmittel beaufschlagt wird, so ergibt sich gleichermaßen eine Längung der Hilfsfeder, sodass diese teilentspannt. Folglich wird durch die Hilfsfeder das Ausfahren des Hubkolbens aus dem Zylinderelement unterstützt. Entlastet jedoch das Federbein, und fährt der Schwingungsdämpfer unter gleichzeitiger Längung der Tragfeder aus, so kann der Hubkolben auch ohne Druckbeaufschlagung des Druckraumes über den definierten Weg bis zu einem Ausfahranschlag aus dem Zylinderelement ausfahren.

Das Zylinderelement und der Hubkolben können im Wesentlichen rotationssymmetrisch um die Kolbenstange und damit um die Längsrichtung des Federbeins ausgebildet sein. Der Außendurchmesser des Zylinderelementes kann dabei größer sein als der Durchmesser der Tragfeder, sodass die Tragfeder an der dem Druckraum abgewandten, äußeren Seite des Kolbens über eine Federaufnahme gegen diesen anliegen kann. Insbesondere können der Durchmesser der Aufnahmetasche zur innenseitigen Aufnahme der Hilfsfeder im Hubkolben und der Durchmesser der Federaufnahme zur außenseitigen Abstützung der Hilfsfeder gegen den Hubkolben im Wesentlichen gleich zueinander ausgebildet sein.

Die Hilfsfeder kann einen Federdraht mit einem rechteckigen Querschnitt aufweisen. Damit wird der Vorteil erreicht, dass bei vergrößerter Federrate die Hilfsfeder ein geringes Blockmaß aufweist. Dadurch wird ebenfalls vermieden, dass sich das Höhenmaß der Höhenverstelleinrichtung am Federbein durch die Integration der Hilfsfeder unnötig vergrößert.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein Ausführungsbeispiel eines Federbeins für ein Kraftfahrzeug mit einem Schwingungsdämpfer, mit einer Tragfeder und mit einer Höhenverstellung, die sich im eingefahrenen Zustand befindet und
- Figur 2: das Ausführungsbeispiel des Federbeins für ein Kraftfahrzeug gemäß Figur 1, wobei sich die Höhenverstelleinrichtung im ausgefahrenen Zustand befindet.

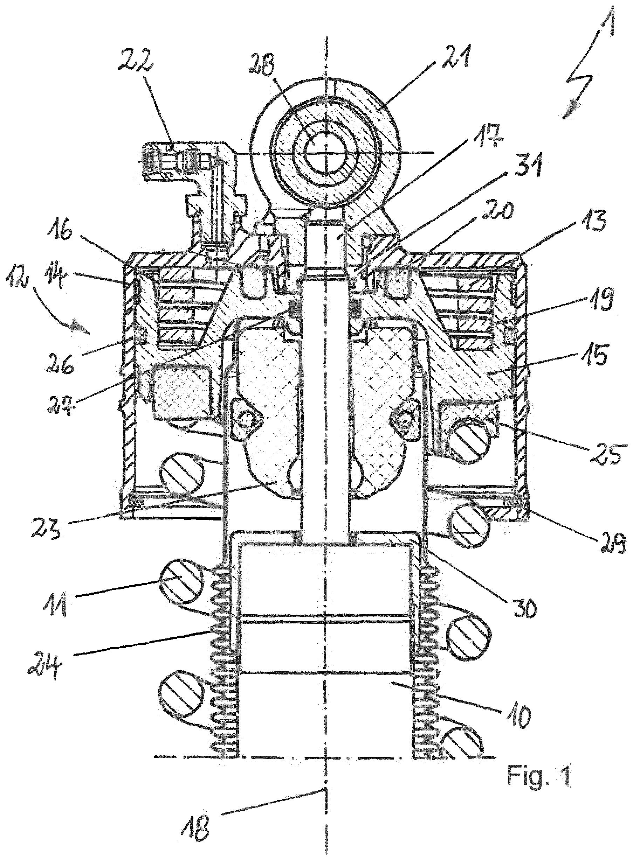

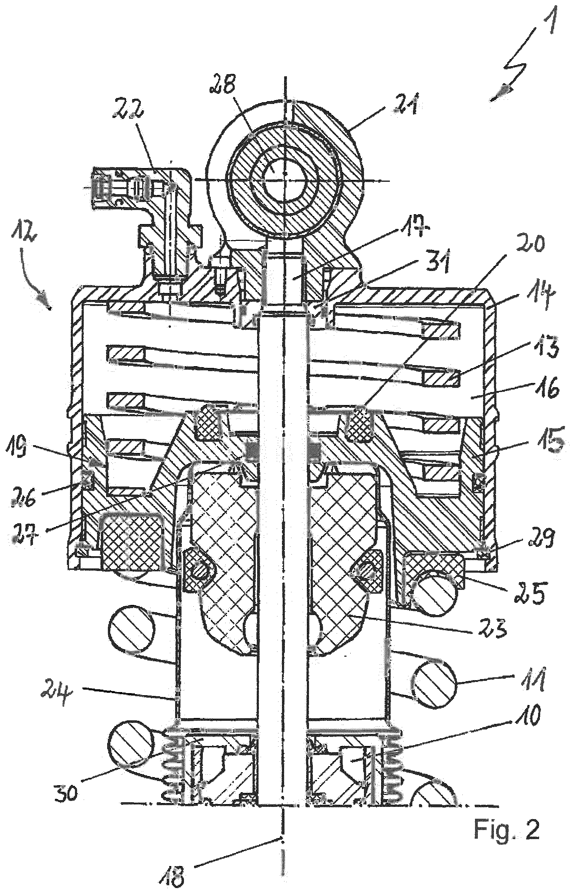

In den Figuren 1 und 2 ist jeweils ein Federbein 1 für ein Kraftfahrzeug mit einem Schwingungsdämpfer 10, mit einer Tragfeder 11 und mit einer Höhenverstelleinrichtung 12 gezeigt, wobei das Federbein 1 im Bereich der Höhenverstelleinrichtung 12 geschnitten dargestellt ist. In Figur 1 ist die Höhenverstelleinrichtung 12 in einem eingefahrenen und in Figur 2 in einem ausgefahrenen Zustand gezeigt.

Die Höhenverstelleinrichtung 12 weist ein Zylinderelement 14 auf, das topfartig ausgeführt ist und in dem ein Hubkolben 15 aufgenommen ist. Das Zylinderelement 14 ist auf der oberen Außenseite mit einem Verbindungselement 21 verbunden, und das Verbindungselement 21 weist ein Verbindungsauge 28 auf, mit dem das Federbein 1 beispielsweise am Fahrzeugaufbau des Kraftfahrzeugs gelenkig verbunden werden kann. Der sich nach unten in Richtung zum Radträger erstreckende Teil des Federbeins 1 ist nicht weiter gezeigt.

Der Schwingungsdämpfer 10 weist eine Kolbenstange 17 auf, die aus dem Schwingungsdämpfer 10 ein- und ausfahrbar ist. Das freie Ende der Kolbenstange 17 ist mit dem Verbindungselement 21 verbunden und bildet folglich mit diesem und mit dem Zylinderelement 14 eine zueinander starre Einheit.

Im Zylinderelement 14 ist ein Druckraum 16 gebildet, der durch den Hubkolben 15 beweglich begrenzt wird. Über einen Druckmittelanschluss 22 am Zylinderelement 14 kann der Druckraum 16 unter Druck gesetzt werden, beispielsweise mit Druckluft. Dadurch kann der Hubkolben 15 nach unten aus dem Zylinderelement 14 über einen definierten Weg ausfahren, bis der Hubkolben 15 unterseitig gegen einen Ausfahranschlag 29 anschlägt, der im Bereich des offenen Randes des Zylinderelementes 14 eingebracht ist. Wird der Druckraum 16 unter Druck gesetzt, und fährt der Hubkolben 15 über seinen definierten Weg aus dem Zylinderelement 14 heraus, siehe Figur 2, so kann der Fahrzeugaufbau des Kraftfahrzeugs angehoben werden, da sich die Tragfeder 11 über eine Federaufnahme 25 außenseitig am Hubkolben 15 abstützt. Wird der Druckraum 16 über den Druckmittelanschluss 22 wieder entlüftet, so bewirkt das Gewicht des Fahrzeugaufbaus wieder ein Einfahren des Hubkolbens 15 in das Zylinderelement 14, wodurch sich der Fahrzeugaufbau des Kraftfahrzeugs relativ zum Radkörper wieder absenkt. Zur Abdichtung des Hubkolbens 15 im Zylinderelement 14 ist ein Dichtelement 26 und zur Abdichtung des Hubkolbens 15 zur Kolbenstange 17 ist ein Dichtelement 27 vorgesehen. Ist der Druckraum 16 vollständig entlüftet, so gelangt unter vorheriger Dämpfung durch einen Anschlagpuffer 20 der Hubkolben 15 gegen eine Anschlagscheibe 31 zur Anlage, die in direktem Kontakt mit dem Verbindungselement 21 steht und folglich starr mit dem Zylinderelement 14 verbunden ist. Dadurch entsteht ein direkter Kraftfluss von der Tragfeder 11 über die Federaufnahme 25 und den Hubkolben 15 in das Zylinderelement 14 beziehungsweise in das Verbindungselement 21.

Unterseitig des Hubkolbens 15 ist ein Anschlagelement 23 aufgenommen, gegen das das Verschlusspaket 30 des Schwingungsdämpfers 10 anstößt, wenn die Kolbenstange 17 vollständig in den Schwingungsdämpfer 10 einfährt. Weiterhin gezeigt ist eine Schutzmanschette 24, die das Anschlagelement 23 und den Schwingungsdämpfer 10 umschließt und die zwischen dem Anschlagelement 23 und dem Hubkolben 15 haltend aufgenommen ist.

Erfindungsgemäß ist in der Höhenverstelleinrichtung 12 eine Hilfsfeder 13 aufgenommen. Die Hilfsfeder 13 befindet sich im Druckraum 16 der Höhenverstelleinrichtung 12 und ist zwischen dem Boden des Zylinderelementes 14 und dem Hubkolben 15 verspannt. Folglich übt die Hilfsfeder 13 auf den Hubkolben 15 eine Kraft in Längsrichtung 18 des Federbeins 1 aus, sodass der Hubkolben 15 durch die Hilfsfeder 13 aus dem Zylinderelement 14 herausgedrückt werden kann, bis der Hubkolben 15 gegen den Ausfahranschlag 29 anschlägt. Da die Federrate der Hilfsfeder 13 kleiner ist als die Federrate der Tragfeder 11, ist die Hilfsfeder 13 im Normalzustand des Kraftfahrzeugs komprimiert, sodass ohne eine Druckbeaufschlagung des Druckraums 16 der Hubkolben 15 in der in Figur 1 gezeigten eingefahrenen Position im Zylinderelement 14 verbleibt. Erst bei Druckbeaufschlagung des Druckraumes 16 kann der Hubkolben 15 aus dem Zylinderelement 14 ausfahren, wie in Figur 2 gezeigt. Die kann beispielsweise zur Niveauänderung bei Sportfahrzeugen genutzt werden, um die Bodenfreiheit des Fahrzeugs zumindest vorübergehend zu vergrößern.

Hebt jedoch das Kraftfahrzeug beispielsweise von der Fahrbahn ab oder befindet sich das Kraftfahrzeug auf einer Hebebühne oder wird der Schwingungsdämpfer 10 aus dem Kraftfahrzeug entnommen, so wird die Tragfeder 11 entlastet und die Kolbenstange 17 fährt aus dem Zylinder des Schwingungsdämpfers 10 aus. Um im ausgefahrenen Zustand des Federbeins 1 noch eine Restvorspannung auf der Tragfeder 11 aufrecht zu erhalten, dient die Hilfsfeder 13, die bei einer Entlastung des Federbeins 1 ausfährt, und eine Bewegung des Hubkolbens 15 erzeugt, wie diese auch durch eine Druckbeaufschlagung des Druckraumes 16 erzeugbar ist.

Um eine bauraumminimale Integration der Hilfsfeder 13 in der Höhenverstelleinrichtung 12 zu erreichen, ist im Hubkolben 15 eine ringförmige Aufnahmetasche 19 eingebracht, in der die Hilfsfeder 13 einsitzt. Schlägt der Hubkolben 15 unter Dämpfung durch den Anschlagpuffer 20 gegen die Anschlagscheibe 31 an, so wird durch die entsprechende Dimensionierung der Aufnahmetasche 19 die Hilfsfeder 13 nicht auf Block geschoben, und wie in Figur 1 gezeigt ist die Hilfsfeder 13 mit dem rechteckförmigen Federdrahtquerschnitt gezeigt, wobei die Federwindungen nicht aufeinander liegen, obwohl der Hubkolben 15 bereits gegen die Anschlagscheibe 31 angeschlagen ist und somit mit dem Zylinderelement 14 im Kraftfluss steht.

Im Ergebnis wird eine bauraumminimale Integration der Hilfsfeder 13 im Federbein 1 geschaffen, indem diese in der Höhenverstelleinrichtung 12 aufgenommen ist. Der Hubkolben 15 wirkt dabei als Zwischenfederteller, und unterseitig des Hubkolbens 15 liegt die Tragfeder 11 an, und oberseitig schließt sich die Hilfsfeder 13 innenliegend in der Aufnahmetasche 19 an. Die Wirkung der Hilfsfeder 13 kann dabei auf gleiche Weise genutzt werden wie mit einer Hilfsfeder 13, die beispielsweise unterseitig der Tragfeder 11 in Richtung zum Radträger des Fahrzeugs im Federbein 1 angeordnet wäre.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumliche Anordnungen, können sowohl für sich als auch in den verschiedensten Kombinationen erfindungswesentlich sein.

### Bezugszeichenliste

- 1: Federbein

- 10: Schwingungsdämpfer
- 11: Tragfeder
- 12: Höhenverstelleinrichtung
- 13: Hilfsfeder
- 14: Zylinderelement
- 15: Hubkolben
- 16: Druckraum
- 17: Kolbenstange
- 18: Längsrichtung
- 19: Aufnahmetasche
- 20: Anschlagpuffer
- 21: Verbindungselement
- 22: Druckmittelanschluss
- 23: Anschlagelement
- 24: Schutzmanschette
- 25: Federaufnahme
- 26: Dichtelement
- 27: Dichtelement
- 28: Verbindungsauge
- 29: Ausfahranschlag
- 30: Verschlusspaket
- 31: Anschlagscheibe

## Patentansprüche

1. Federbein (1) für ein Kraftfahrzeug mit einem Schwingungsdämpfer (10), mit einer Tragfeder (11) und mit einer Höhenverstelleinrichtung (12), mit der der Fahrzeugaufbau des Kraftfahrzeuges in der Höhe veränderbar ist, und wobei das Federbein (1) eine Hilfsfeder (13) aufweist, und wobei die Hilfsfeder (13) in der Höhenverstelleinrichtung (12) integriert ist,
wobei die Höhenverstelleinrichtung (12) ein Zylinderelement (14) und einen im Zylinderelement (14) aufgenommenen Hubkolben (15) umfasst,
und wobei der Hubkolben (15) einen Druckraum (16) im Zylinderelement (14) beweglich begrenzt und wobei die Hilfsfeder (13) im Druckraum (16) angeordnet ist, und wobei das Zylinderelement einen Druckmittelanschluss aufweist,
und wobei die Hilfsfeder (13) im Zylinderelement (14) aufgenommen ist und zwischen dem Hubkolben (15) und dem Zylinderelement (14) verspannt ist, sodass durch den Hubkolben (15) ein Zwischenfederteller gebildet ist und der Hubkolben (15) durch die Hilfsfeder (13) mit einer in Richtung zur Tragfeder (11) gerichteten Kraft beaufschlagt ist,
**dadurch gekennzeichnet, dass** der Schwingungsdämpfer (10) eine Kolbenstange (17) aufweist, die in Längsrichtung (18) des Federbeins (1) durch den Hubkolben (15) hindurch geführt ist, wobei zur Abdichtung des Hubkolbens (15) zur Kolbenstange (17) ein Dichtelement (27) vorgesehen ist und wobei die Kolbenstange (17) mit dem Zylinderelement (14) verbunden ist, wobei die Hilfsfeder (13) eine geringere Federrate als die Tragfeder (11) aufweist, durch die bei ausgefahrenem Schwingungsdämpfer (10) eine Restvorspannung in der Tragfeder (11) erzeugbar ist.

2. Federbein (1) nach einem der vorgenannten Ansprüche, **dadurch gekennzeichnet, dass** der Hubkolben (15) eine um die Längsrichtung (18) ausgebildete, ringförmige Aufnahmetasche (19) aufweist, in der die Hilfsfeder (13) wenigstens teilweise einsitzt.

3. Federbein (1) nach einem der vorgenannten Ansprüche, **dadurch gekennzeichnet, dass** eine Anschlagscheibe (31) vorgesehen ist, über die der Hubkolben (15) direkt oder indirekt gegen das Zylinderelement (14) zur Anlage gelangt, wenn der Hubkolben (15) maximal in das Zylinderelement (14) eingefahren ist, wobei die Aufnahmetasche (19) zur Aufnahme der Hilfsfeder (13) derart bemaßt ist, dass bei Anlage des Hubkolbens (15) gegen die Anschlagscheibe (31) der Federdraht der Hilfsfeder (13) nicht auf Block gedrückt ist.

4. Federbein (1) nach einem der vorgenannten Ansprüche, **dadurch gekennzeichnet, dass** das Zylinderelement (14) und der Hubkolben (15) im Wesentlichen rotationsymmetrisch um die Kolbenstange (17) ausgebildet sind.

5. Federbein (1) nach einem der vorgenannten Ansprüche, **dadurch gekennzeichnet, dass** endseitig an der Kolbenstange (17) ein Verbindungselement (21) angeordnet ist, das mit dem Zylinderelement (14) starr verbunden ist.

6. Federbein (1) nach einem der vorgenannten Ansprüche, **dadurch gekennzeichnet, dass** die Hilfsfeder (13) einen Federdraht mit einem rechteckförmigen Querschnitt aufweist.

## Claims

1. Suspension strut (1) for a motor vehicle, having a vibration damper (10), having a supporting spring (11) and having a height adjustment device (12) by means of which the height of the vehicle body of the motor vehicle can be varied, and wherein the suspension strut (1) has an auxiliary spring (13), and wherein the auxiliary spring (13) is integrated in the height adjustment device (12), wherein the height adjustment device (12) comprises a cylinder element (14) and a piston (15) accommodated in the cylinder element (14), and wherein the piston (15) movably delimits a pressure chamber (16) in the cylinder element (14), and wherein the auxiliary spring (13) is arranged in the pressure chamber (16),
and wherein the cylinder element has a pressure medium port,
and wherein the auxiliary spring (13) is accommodated in the cylinder element (14) and is braced between the piston (15) and the cylinder element (14), such that an intermediate spring plate is formed by the piston (15) and the piston (15) is acted on by the auxiliary spring (13) with a force directed toward the supporting spring (11),
**characterized in that** the vibration damper (10) has a piston rod (17) which is led through the piston (15) in the longitudinal direction (18) of the suspension strut (1), wherein a sealing element (27) is provided for the sealing of the piston (15) with respect to the piston rod (17), and wherein the piston rod (17) is connected to the cylinder element (14), wherein the auxiliary spring (13) has a lower spring rate than the supporting spring (11), by means of which a residual preload can be generated in the supporting spring (11) when the vibration damper (10) is in an extended state.

2. Suspension strut (1) according to the preceding claim, **characterized in that** the piston (15) has an annular receiving pocket (19) which is formed around the longitudinal direction (18) and in which the auxiliary spring (13) is at least partially seated.

3. Suspension strut (1) according to one of the preceding claims, **characterized in that** a stop disk (31) is provided via which the piston (15) abuts directly or indirectly against the cylinder element (14) when the piston (15) is retracted to a maximum extent into the cylinder element (14), wherein the receiving pocket (19) for receiving the auxiliary spring (13) is dimensioned such that, when the piston (15) is in abutment against the stop disk (31), the spring wire of the auxiliary spring (13) is not compressed into a block state.

4. Suspension strut (1) according to one of the preceding claims, **characterized in that** the cylinder element (14) and the piston (15) are of substantially rotationally symmetrical form about the piston rod (17).

5. Suspension strut (1) according to one of the preceding claims, **characterized in that**, on the end side of the piston rod (17), there is arranged a connecting element (21) which is rigidly connected to the cylinder element (14).

6. Suspension strut (1) according to one of the preceding claims, **characterized in that** the auxiliary spring (13) has a spring wire with a rectangular cross section.

## Revendications

1. Jambe de force à ressort (1) pour un véhicule automobile avec un amortisseur d'oscillations (10), avec un ressort porteur (11) et avec un dispositif de réglage de hauteur (12), avec lequel la structure de véhicule du véhicule automobile peut être modifiée en hauteur, et dans laquelle la jambe de force à ressort (1) présente un ressort auxiliaire (13), et dans laquelle le ressort auxiliaire (13) est intégré dans le dispositif de réglage de hauteur (12),
dans laquelle le dispositif de réglage de hauteur (12) comprend un élément de cylindre (14) et un piston alternatif (15) logé dans l'élément de cylindre (14),
et dans laquelle le piston alternatif (15) limite de façon mobile une chambre de pression (16) dans l'élément de cylindre (14) et dans laquelle le ressort auxiliaire (13) est disposé dans la chambre de pression (16), et dans laquelle l'élément de cylindre présente un raccord d'agent sous pression,
et dans laquelle le ressort auxiliaire (13) est logé dans l'élément de cylindre (14) et est tendu entre le piston alternatif (15) et l'élément de cylindre (14), de telle manière qu'une cuvette de ressort intermédiaire soit formée par le piston alternatif (15) et que le piston alternatif (15) soit chargé par le ressort auxiliaire (13) avec une force dirigée en direction du ressort porteur (11),
**caractérisée en ce que** l'amortisseur d'oscillations (10) présente une tige de piston (17), qui est guidée à travers le piston alternatif (15) dans la direction longitudinale (18) de la jambe de force à ressort (1), dans laquelle il est prévu un élément d'étanchéité (27) pour l'étanchéité du piston alternatif (15) par rapport à la tige de piston (17) et dans laquelle le tige de piston (17) est reliée à l'élément de cylindre (14), dans laquelle le ressort auxiliaire (13) présente une raideur moindre que le ressort porteur (11), grâce à laquelle une précontrainte résiduelle peut être produite dans le ressort porteur (11) lorsque l'amortisseur d'oscillations (10) est sorti.

2. Jambe de force à ressort (1) selon la revendication précédente, **caractérisée en ce que** le piston alternatif (15) présente une cuvette de réception annulaire (19) formée autour de la direction longitudinale (18), dans laquelle le ressort auxiliaire (13) s'applique au moins en partie.

3. Jambe de force à ressort (1) selon l'une quelconque des revendications précédentes, **caractérisée en ce qu'**il est prévu un disque de butée (31), par lequel le piston alternatif (15) vient buter directement ou indirectement contre l'élément de cylindre (14), lorsque le piston alternatif (15) est rentré au maximum dans l'élément de cylindre (14), dans laquelle la cuvette de réception (19) destinée à recevoir le ressort auxiliaire (13) est dimensionnée de telle manière que, lors de la butée du piston alternatif (15) contre le disque de butée (31), le fil de ressort du ressort auxiliaire (13) ne soit pas comprimé à bloc.

4. Jambe de force à ressort (1) selon l'une quelconque des revendications précédentes, **caractérisée en ce que** l'élément de cylindre (14) et le piston alternatif (15) sont réalisés essentiellement avec la symétrie de rotation autour de la tige de piston (17).

5. Jambe de force à ressort (1) selon l'une quelconque des revendications précédentes, **caractérisée en ce qu'**un élément de liaison (21) est disposé en extrémité sur la tige de piston (17), et est rigidement assemblé à l'élément de cylindre (14).

6. Jambe de force à ressort (1) selon l'une quelconque des revendications précédentes, **caractérisée en ce que** le ressort auxiliaire (13) présente un fil de ressort avec une section transversale rectangulaire.
